# EUROPEAN PATENT APPLICATION

(11) **EP 3 599 267 A1**
(43) Date of publication of application: **29.01.2020**
(21) Application number: 18425051.2
(22) Date of filing: 28.07.2018
(51) Int. Cl.: C10L 5/10, C10L 5/36, C10L 5/44

(54) **PELLETS REALIZED BY AGGREGANTS OF COFFEE REFUSE AND NATURAL ADDITIVES**

(71) Applicant: Global Service Srl, 86170 Isernia (IS) (IT)
(72) Inventor: Global Service Srl, 86170 Isernia (IS) (IT)

(57) **Abstract**

The present invention relates to a particular type of natural fuel for heating use obtained from the conversion into pellets of woody material and solid residue of coffee grounds characterized by a high calorific value and reduced ash content. These characteristics allow it to be used in stoves manufactured for standard pellets without having to make any changes. The type of pellet fuel of the present invention is obtained through the mixing of woody material and solid residue of coffee grounds, in which the concentration of solid residue of coffee grounds is included in the range 69.5% - 70, 5%, more preferably about 70%, by weight per volume and in which the concentration of woody material ranges from 29% to 30% by weight per volume.

## Description

### Field of the invention

The present invention relates to a particular type of natural fuel for heating use obtained from the conversion into pellets of woody material and solid residue of coffee grounds.

### Brief outline of the known art

In recent years there has been a growing interest in environmental issues. This has introduced the emergence of economic policies increasingly oriented towards a sustainable commitment of energy resources, with the consequent promotion of new markets also linked to the use of energy sources of plant origin. In the Italian context, the main sector in which to introduce such energy sources is represented by the market of fuels used for the supply of heating systems for small or large buildings.

The possibility of reducing the impact on the environment by reusing waste as raw material is a very topical subject.

In the growing complexity of the current productive and economic reality, it becomes necessary in the planning field, to disengage from the exclusive focus on the product and its life cycle, and to extend the attention, and therefore the competence, to the complex relations generated by the production process. Designing only the product, by coordinating and integrating all functional, symbolic, cultural, technical and productive factors, is an approach to be overcome because it does not solve the environmental problem as a whole, but finds specific and timely solutions that are not coordinated with each other. It is necessary to reacquire the cultural and practical capacity to know how to outline and plan the flows that flow from one system to another, in a continuous metabolization that decreases the ecological footprint and generates a considerable economic flow. This model draws inspiration from the foundations of Generative Science according to which any transformation of resources leads to by-products that can generate added value and become object of an evaluation chain.

Organic waste is a fundamental part of this process, making it essential to dispose of it and requiring constant efforts throughout the food chain. In the automatic distribution channel (vending), in particular, coffee grounds are one of the most voluminous waste (every year only 240 mln of Kg of coffee are roasted in Italy, of which about 75%, equivalent to 180 mln of Kg, become waste), even if their organic matrix has different qualities now highlighted by several studies. They can be used as soil improvers, contain interesting molecules for cosmetics, are a possible source of biofuels, etc. Coffee funds are a useful resource for new production activities related to the territory, able to generate new prospects for services and products with environmental and economic advantages.
he output of coffee beverage production can become the input of several other productions. Among the most interesting uses for coffee grounds is the production of pellets through pyrolytic stoves, with significant energy savings. Other uses of coffee grounds are for example:
- Extraction of lipids with one of the processes commonly used for the extraction of caffeine from the beans in order to obtain the decaffeinated; it is possible to obtain lipids and waxes for the pharmaceutical supply chain;
- Cultivation of edible mushrooms: from the extraction process a compact paste is also obtained which is then used in the formation of a substrate used for the cultivation of mushrooms, with excellent nutritional and pharmaceutical properties;
- Natural fertilization: in agriculture after mushroom cultivation, the same substrate is used for the production of vermicompost.

In this perspective, the inventor intends to exploit the resource offered by the solid residues of coffee grounds for the production of eco-sustainable pellets. The inventor intends to start a reuse circuit of a resource currently considered a waste, as happens in some case-studies worldwide (Colombia, Zimbabwe, Belgrade, Tokyo), allowing the reduction of disposal costs incurred by the community. Coffee waste can therefore become a viable alternative to first-generation fuels, entering fully into the second-generation fuels that do not subtract soil to food crops and prevent biodiversity damage with intensive crops. Coffee grounds do not contain normed heavy minerals (lead, cadmium, chromium and cobalt) and have low concentrations of nickel, zinc, copper, while they are rich in other minerals (potassium, magnesium, iron, calcium, manganese) important to feed the soil and the plants. Above all, according to data from the Department of Agricultural and Environmental Sciences of the University of Udine "The energy yield of coffee pellets is twice that of wood".

### Summary of the invention

The present refers to a type of natural fuel for heating use such as that indicated in the claims all.

The Applicant of the present application has identified a type of fuel in pellets of coffee grounds, consisting of woody material and solid residue of coffee grounds, characterized by a high calorific value and reduced ash content. These characteristics allow it to be used in stoves manufactured for standard pellets without having to make any changes.

In the present invention, the term "pellet" refers to a fuel obtained from pulverized biomass without pressing additives, of a random length typically between 5 mm and 30 mm, and with interrupted ends.

The term woody material indicates the plant tissue that constitutes the stem of plants having secondary growth (tree, shrub, liana and some herbs) and essentially composed of cellulose, hemicellulose and lignin. The woody material consists of cellulose fibers retained by a lignin matrix while the role of hemicellulose has not yet been clarified. Coffee grounds are ground grains that advance after coffee preparation. It is an organic waste that can lend itself to different re-uses.

Preferably, the type of pellet fuel of the present invention is obtained through the mixing of woody material and solid residue of coffee grounds, in which the concentration of solid residue of coffee grounds is included in the range 69.5% - 70, 5%, more preferably about 70%, by weight per volume and in which the concentration of woody material ranges from 29% to 30% by weight per volume.

The lignin, contained in the woody material, acts as glue allowing to obtain a compact product without adding additives or chemicals extraneous to the wood. This binding capacity is facilitated by introducing water in the form of steam (about 70 ° C) in the measure of 1-2% during the production process of the pellet.

To give the material a certain resistance to abrasion, natural substances are added, with a maximum of 0.5%, such as starch and flour, which also facilitate pressing.

The type of fuel in pellet, consisting of woody material and solid residue of coffee grounds, of the present invention has a high calorific value equal to 24MJ / Kg (8/9 kWh / Kg) higher than the calorific value of the standard pellets on the market. at 18 MJ / Kg (5 kWh / Kg) with a yield in terms of energy production equal to 150%.

The supply and the physical characteristics (shape, dimensions, packaging) are the same as the current characterizing the wood pellets and allow a total integration of the invention with the current biomass heating systems fed with wood pellets.

The present invention is characterized by a post-combustion ash content equal to 1.95%, much lower than the ash residue of the current standard pellets, and lower than the 2% limit provided for by uniform quality standards at Community level. The combustion residue (ash) is again in turn reusable in the form of natural fertilizer, unlike the ashes of the current pellets on the market which present the problem of petrification due to the presence of added phosphates to increase the caloric yield.

The chemical-physical properties of wood material pellets and solid residues of coffee grounds allow lower CO² emissions into the atmosphere compared to the quantities of CO² produced by using standard pellets.

For those skilled in the art, other objects, advantages and features of the invention will be deduced in part from the description and in part from the practice of the invention.

The following examples are given by way of illustration and are not intended to limit the present invention.

### Examples

### Example 1 (invention).

Samples of 6-8 mm pellets of the fuel type of the invention (defined as "composition 1") were prepared.

Solid residues of coffee grounds (99.5%), starch (0.25%) and flour (0.25%) were mixed together, the percentages expressed by weight per volume. The composition thus obtained was defined as composition 1.

### Example 2 (invention).

In a similar manner to that described in Example 1, samples of 6-8 mm pellets of the fuel type of the invention (defined as "composition 2") were prepared, analogous to the composition 1 of the invention described above, with the difference that the composition 2 further comprised 10% by weight per volume of woody material, instead of a similar percentage by weight of solid residue of coffee grounds.

### Example 3 (invention).

In a similar manner to that described in Example 2, samples of 6-8 mm pellets of the fuel type of the invention (defined as "composition 3") were prepared, completely analogous to the composition 2 of the invention described above, with the difference that the composition 3 further comprised 10% by weight per volume of woody material, replacing a similar percentage by weight of solid residue of coffee grounds, which therefore appeared to be in a quantity of 20% by weight per volume, compared to 10% of the composition 2.

### Example 4 (invention).

In a similar manner to that described in Example 3, samples of 6-8 mm pellets of the fuel type of the invention (defined as "composition 4") were prepared, completely analogous to the composition 3 of the invention described above, with the difference that the composition 4 further comprised 10% by weight per volume of woody material, replacing a similar percentage by weight of solid residue of coffee grounds, which therefore appeared to be in quantities of 30% by weight per volume, compared to 20% of the composition 3.

### Evaluation Composition 1 (invention).

Inside a traditional biomass boiler, equipped with a programmable control unit to control the ignition, powering and switching off phases, 15 kg of sample of the composition 1 of the invention were inserted (comprising 99.5% by weight for residual volume solid of coffee grounds). The boiler was switched on and left running until the combustion of the sample of composition 1 was completed.

During the period of operation of the boiler, inside the combustion chamber, extremely high temperature values were recorded, such as to compromise the structural solidity of the brazier materials, and the total absence of flame. At the end of the test, moreover, a significant phenomenon of carbonification was found.

### Evaluation Composition 2 (invention).

In a similar way to what was described in the Evaluation Composition 1, inside a traditional biomass boiler, equipped with a programmable control unit for controlling the ignition, feeding and extinguishing phases, 15 kg of sample of the composition 2 of the invention were inserted ( comprising 89.5% by weight per volume of solid residue of coffee grounds and 10% by weight per volume of woody material). The boiler was turned on and left running until the combustion of the sample of composition 2 was completed.

During the period of operation of the boiler, inside the combustion chamber, extremely high temperature values were recorded, accompanied by the presence of flame. During the test it was found a significant phenomenon of carbonification, lower than that found in the assessment test of the composition 1, and considerable accumulation of residual material (ash) in the brazier due to long combustion times. Furthermore, reduced boiler efficiency and poor pellet combustion were found.

### Evaluation Composition 3 (invention).

In a similar way to what was described in the Composition 2 Assessment, inside a traditional biomass boiler, equipped with a programmable control unit for the control of the ignition, feeding and extinguishing phases, 15 kg of sample of the composition 3 of the invention were inserted ( comprising 79.5% by weight per volume of solid residue of coffee grounds and 20% by weight per volume of woody material). The boiler was switched on and left running until the combustion of the sample of composition 3 was completed.

During the period of operation of the boiler, the number of cycles of the feeding screw was reduced to allow a lower contribution of pellets per unit of time. Within the combustion chamber, a carbonification phenomenon was recorded that was lower than that found in the assessment test of composition 2 and flame presence. Furthermore, the reduced pellet supply resulted in the intermittent shutdown of the boiler, due to the lack of comburent material, and difficulty in restarting the boiler.

### Evaluation Composition 4 (invention).

In a similar way to what was described in the Composition 3 Assessment, inside a traditional biomass boiler, equipped with a programmable control unit for the control of the ignition, feeding and extinguishing phases, 15 kg of sample of the composition 4 of the invention were inserted ( comprising 69.5% by weight per volume of solid residue of coffee grounds and 30% by weight per volume of woody material). The boiler was switched on and left running until the combustion of the sample of composition 3 was completed.

During the period of operation of the boiler, the same number of cycles as the feeding screw was adopted as in the assessment test of the composition 3.

Inside the combustion chamber, the presence of flame and optimal combustion values were recorded without the formation of carbonification phenomena. In addition, a complete combustion of the pellets and the almost total absence of fumes were found.

The industrial invention has been described with reference to a preferred embodiment thereof, but it will be understood that to those skilled in the art many modifications and variations will be evident which can be made to such preferred embodiments described of the type of fuel and its use according to the present invention, still remaining within the scope accorded to the invention itself.

Thus, the scope and scope of the present disclosure should not be limited by any of the exemplary embodiments described above, but should be defined only on the basis of the following appended claims and their equivalents.

## Claims

1. Pellets of coffee grounds for heating use comprising:
- solid residues of coffee grounds;
- woody material;

2. Pellets for heating use according to claim 1, in which the solid residues of coffee grounds are organic waste deriving from ground coffee beans which advance after the preparation of the coffee;

3. Pellets for heating use according to claim 1, in which the woody material includes plant tissue which constitutes the stem of plants having secondary growth and is composed of cellulose, hemicellulose and lignin;

4. Pellets for heating use according to claim 3, in which the wood material comes from sawdust residues and wood working (chips and sawdust) produced by sawmills and woodworking;

5. Pellets for heating use according to claims 1 to 3, wherein the concentration of solid residue of coffee grounds is in the range 69.5% - 70.5% by weight per volume and in which the concentration of material woody varies from 29% to 30% by weight per volume;

6. Pellets for heating use according to claim 1, the binding capacity of lignin is facilitated by introducing water in the form of vapor in the measure of 1/2%;

7. Pellets for heating use according to claims 1 and 5 to 8, in which, to give resistance to the abrasion of coffee grounds pellets, are added natural substances, such as a maximum of 0.5%, such as starch and flour;

8. Pellets for heating use according to claim 1, in which the coffee grounds pellet has a high calorific value equal to 24 MJ / Kg (8/9 kWh / Kg);

9. Pellets for heating use according to claim 1, wherein the coffee grounds pellet has a cylindrical or spherical embodiment;

10. Pellets for heating use according to claim 9, wherein the coffee grounds pellet has a cylindrical embodiment with an average diameter of between 6 mm and 8 mm and an average length of between 5 mm and 30 mm;

11. Pellets for heating use according to claim 9, wherein the coffee grounds pellet has a spherical embodiment with an average diameter of between 6 mm and 8 mm;

12. Pellets for heating use according to claim 1, wherein the ash content after combustion is equal to 1.95% lower than the limit of 2% provided by uniform quality standards at Community level;

13. Pellets for heating use according to claim 12, in which the ash content after combustion, equal to 1.95%, allows its use in heat generators manufactured for standard pellets without having to make any changes to the heat generator.
